# EUROPÄISCHE PATENTSCHRIFT

(11) **EP 3 713 049 B1**
(45) Veröffentlichungstag und Bekanntmachung des Hinweises auf die Patenterteilung: **26.06.2024**
(21) Anmeldenummer: 20160883.3
(22) Anmeldetag: 04.03.2020
(51) Int. Cl.: H02K 1/276

(54) **ROTOR MIT GEGOSSENEN MAGNETELEMENTEN MIT VORSPRÜNGEN**
ROTOR HAVING CAST MAGNETIC ELEMENTS WITH PROJECTIONS
ROTOR AVEC ÉLÉMENTS MAGNÉTIQUES MOULÉS POURVUS DE SAILLIES

(30) Priorität: 22.03.2019 DE 102019107394
(43) Veröffentlichungstag der Anmeldung: 23.09.2020
(73) Patentinhaber: BRUSA Technology AG, 9470 Buchs (CH)
(72) Erfinder: TEUFEL, Raphael, 72186 Empfingen (DE); ZHOU, Tian, 6015 Luzern (CH); OESCHGER, Daniel, 9015 St. Gallen (CH)
(74) Vertreter: Rösler Rasch van der Heide & Partner

(56) Entgegenhaltungen:
- EP-A1- 2 858 214
- WO-A1-2018/024605
- DE-A1- 4 033 454
- DE-A1-102013 211 858
- US-A1- 2018 205 276

## Beschreibung

Die Erfindung betrifft einen Rotor aus einem magnetischen Material eines Synchron-Antriebsmotors mit mehreren Rotorpolen, wobei jede Magnetlage eine Reihe von Magnetelementen umfasst, die durch Spritzgießen oder Gießen und Verfestigen von permanentmagnetischem Material in Rotorkavitäten gebildet sind, wobei mindestens ein Teil der Magnetelemente (jeweils in ihren radial inneren Hälften bezüglich ihrer Erstreckung beidseitig abstehende Vorsprünge zur Abstützung der Fliehkräfte der Magnetelemente am Rotor aufweist. Die Erfindung betrifft ferner einen damit versehenen Synchron-Antriebsmotor sowie ein mit einem solchen Antriebsmotor versehenes Kraftfahrzeug.

Synchron-Antriebsmotoren werden vielfach als Antriebsmaschine für Elektrofahrzeuge verwendet, weil diese über dem gesamten Geschwindigkeitsbereich ein hohes Drehmoment und damit eine hohe Leistungsdichte aufweisen und bei geringem Gewicht eine hohe Fahrdynamik des angetriebenen Fahrzeugs gewährleisten. Insbesondere weisen derartige Motoren hohe Essonsche Ausnutzungsziffern auf, so dass ein hohes Kosten-Leistungsverhältnis erreicht werden kann.

Bei Hybrid-Sychronmotoren (HSM) setzt sich das Drehmoment aus zwei Komponenten zusammen, nämlich dem Reluktanzmoment und dem Synchronmoment wobei es wünschenswert ist, den Anteil des Reluktanzmoments am Gesamtdrehmoment so weit wie möglich zu erhöhen, idealerweise 50% oder höher.

Die Rotoren von Synchron-Antriebsmotoren weisen mehrere Pole auf, wobei jedem Pol vergrabene Magnetlagen zugeordnet werden, die im Wesentlichen U-förmig symmetrisch um die Polmittelachsen (nämlich d-Achse) angeordnet sind und aus einer Reihe von Kavitäten bestehen, in denen Permanentmagneten angeordnet sind.

Aus der JP 2000197320A ist ein derartiger Rotor bekannt, bei dem die Magnetlagen durch eine fließfähige Kunststoffmatrix mit eingebetteten magnetisierbaren Magnetpartikeln gebildet werden, wobei die erhitzte Substanz mittels eines Spritzgießvorgangs in die im Rotor ausgebildeten Kavitäten gespritzt wird, wobei während des Einspritzvorgangs die einheitliche Ausrichtung der Magneten durch ein starkes äußeres Magnetfeld erreicht wird.

Aus den Druckschriften DE 40 33 454 A1, DE 10 2013 211858 A1, EP 2 858 214 A1, WO 2018/024605 A1 und US 2018/205276 A1 sind Rotoren mit durch Spritzgießverfahren eingebrachten Permanentmagneten bekannt, die seitliche Vorsprünge zur Aufnahme von Fließkräften aufweisen.

Ein Problem dabei ist, dass das eingespritzte Magnetmaterial aufgrund des höheren thermischen Ausdehnungskoeffizienten beim Abkühlvorgang stärker schrumpft als die Umgebung der Kavität und dann im abgekühlten Zustand mit etwas Spiel in der Kavität verbleibt.

Während des Betriebs wird der so hergestellte Magnet einer sehr hohen Zentrifugalkraft ausgesetzt, wodurch aufgrund des Spiels eine erhöhte Druckbelastung auf den radial äußeren Rand der Kavität wirkt. Insbesondere bei den radial außen liegenden Magneten ist es zur Ausrichtung der magnetischen Ströme und Minimierung von Kurzschlussströmen wünschenswert, nur einen relativ schmalen Steg zum Rotoraußenrand zu belassen, was dann zu unerwünschten Belastungen und Verformungen in derartigen Stegen führen würde.

Die Aufgabe der Erfindung ist es, eine Geometrie für Magnetelemente eines Rotors bereitzustellen, welche eine möglichst wirksame Aufnahme der Rotationsfliehkräfte ermöglicht.

Die Erfindung ergibt sich aus den Merkmalen von Anspruch 1. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in der Figur dargestellt sind.

Die erfindungsgemäße Ausbildung bewirkt eine Abstützmöglichkeit im radial inneren Bereich des Magnetelements, wo genügend Rotormaterial vorhanden ist, um eine problemlose Abstützung zu ermöglichen. Dadurch ist es möglich, ein Anstoßen des radial außen liegenden Endes eines Magnetelements an der Kavitätswandung entweder ganz zu unterbinden, was vor allem bei den radial außen befindlichen Magnetelementen wichtig ist, oder die Druckkräfte gegenüber einem herkömmlichen Magnetelement wesentlich zu reduzieren, was die Belastungen und Verformungen in den Stegen und Brücken zwischen den Magnetelementen bzw. zum Rotoraußenrand vermindert. Da die Vorsprünge Abstützflächen zur Fliehkraftabstützung am Rotor aufweisen, deren Flächentangenten einen Winkel von 30° bis 80° zur Erstreckungsrichtung der Magnetelemente ausgerichtet sind, wird zum einen beim Abkühl- und damit einhergehenden Schrumpfungsprozess eine Verschiebung des Magnetelements entgegen der Radialrichtung, also zur Rotormitte bewirkt, was den Spalt zwischen dem Magnetelement und der Kavitätswandung im Bereich des radialen Endes erhöht. Darüber hinaus wird durch die Fliehkräfte eine zentrierende und damit stabilisierende Wirkung auf das Magnetelement erzielt.

Gemäß einer vorteilhaften Weiterbildung der Erfindung sind bei Magnetelementen mit dem Längen/Breitenverhältnis von mehr als 3:1 in der äußeren Hälfte zwei weitere beidseitig abstehende Vorsprünge ausgebildet. Diese Ausbildung ist bei derart länglichen Magnetelementen wegen der größeren fliehkraftinduzierten Längenänderung von Vorteil, insbesondere wenn die Längsachsen derartiger Magnetelemente eher radial ausgerichtet sind und daher die Tendenz zur Druckbeaufschlagung der radial äußeren Kavitätswandung durch das Magnetelement besonders hoch ist.

Gemäß einer vorteilhaften Weiterbildung der Erfindung sind alle Magnetelemente der von radial außen gesehen zweiten und dritten Magnetlage derart ausgebildet. Bei der radial äußersten Magnetlage sind die Magnetelemente relativ tangential ausgerichtet, so dass die Druckbeaufschlagung der Kavitätswandung nur in geringem Maße besteht. Bei der zweiten und noch mehr der dritten Magnetlage sind vor allem die am Rand befindlichen Magnetelemente mehr oder weniger radial ausgerichtet, so dass die erfindungsgemäße Abstützanordnung wirksam ist.

Gemäß einer alternativen vorteilhaften Weiterbildung der Erfindung sind nur die jeweils radial außen befindlichen Magnetelemente einer Magnetlage derart ausgebildet, weil bei diesen, wie oben erwähnt, eine im Wesentlichen radiale Ausrichtung der Längsachse gegeben ist und damit die Fliehkräfte stärkere Auswirkungen haben.

Gemäß einer alternativen vorteilhaften Weiterbildung der Erfindung weisen die Flächentangenten einen Winkel 40° bis 60°, zur Erstreckungsrichtung der Magnetelemente aufweisen. Dabei wäre 0 ° die Erstreckungsrichtung selber.

Gemäß einer vorteilhaften Weiterbildung der Erfindung beträgt die maximale Erstreckung jeder der Vorsprünge normal zur Erstreckungsrichtung der Magnetelemente weniger als 50% der Breite der Magnetelemente an dieser Stelle. Diese Begrenzung dient dazu, nicht allzu viel des Reluktanzflusspfades zu blockieren, da bei dieser Art von Synchronmaschinen große Teile des Moments über den Reluktanzeffekt produziert werden.

Gemäß einer vorteilhaften Weiterbildung der Erfindung sind sich gegenüberliegende Vorsprünge von benachbarten Magnetelementen verschiedener Magnetlagen derart gegeneinander seitlich versetzt, dass die kürzeste Entfernung von einem Vorsprung zum nächstliegenden Vorsprung des benachbarten Magnetelements nicht geringer ist als die kürzeste Entfernung des Vorsprungs zum Seitenrand des benachbarten Magnetelements. Dadurch wird vorteilhafterweise sichergestellt, dass die Materialstärke des Rotormaterials zwischen benachbarten Magnetlagen weitgehend konstant bleibt und dadurch magnetisch gesättigte Bereiche vermieden werden.

Gemäß einer vorteilhaften Weiterbildung der Erfindung sind Endflächen von Magnetelementen, die in der gleichen Magnetlage benachbarten Magnetelementen gegenüberliegen und so Brücken zwischen gegenüberliegenden Endflächen von benachbarten Magnetelementen ausbilden, mindestens in einem Teilbereich von 50% im Wesentlichen eben und parallel zueinander derart geformt, dass die Brücken über mindestens der halben Erstreckung einen konstanten Querschnitt aufweisen. Gemäß einer vorteilhaften Weiterbildung dieser Ausbildung verändert sich die Breite der Brücke in diesem Teilbereich um nicht mehr als 20%. Auf diese Weise werden Brücken mit weitgehend konstantem Querschnitt erzielt, was der Minimierung von magnetischen Verlusten dient.

Gemäß einer vorteilhaften Weiterbildung der Erfindung sind die Vorsprünge jeweils am radial inneren Ende der Magnetelemente angeordnet und deren Rückseiten bilden die radial innere Endfläche des jeweiligen Magnetelements mit aus und verbreitern diese. Dadurch werden Brücken von größerer Erstreckung bei weitgehend konstanter Breite erzielt, was den Vorteil hat, dass der schädliche sogenannte Streufluss einen weiteren Weg hat, wodurch weniger Magnetkraft zu Streufluss wird und somit Drehmoment produziert wird anstatt das Drehmomentrippel, welchen dieser beeinflusst, zu erhöhen.

Die Erfindung umfasst ferner einen Synchron-Antriebsmotor mit einem Rotor nach einer der vorbeschriebenen Aus- oder Weiterbildungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Figur 1:: eine schematische Darstellung eines Rotorsektors gemäß einer ersten Ausführungsform der Erfindung,
- Figur 2:: eine schematische Darstellung eines Rotorsektors gemäß einer zweiten Ausführungsform der Erfindung,
- Figur 3:: eine schematische Darstellung eines Rotorsektors gemäß einer dritten Ausführungsform der Erfindung,
- Figur 4:: einen Ausschnitt der Ausführungsform gemäß Figur 1,
- Figur 5:: den in Figur 1 mit V bezeichneten Ausschnitt,
- Figur 6:: den in Figur 1 mit VI bezeichneten Ausschnitt.

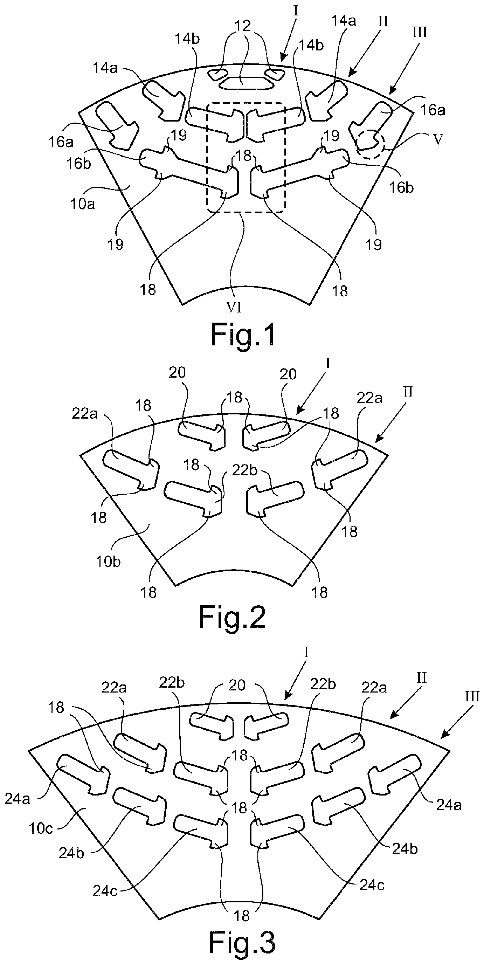

Die Figuren 1 bis 3 zeigen drei Ausführungsformen von sektorartigen Teilen von Rotoren 10a, 10b, 10c, jeweils symmetrisch bezüglich einer radialen Polachse. Normalerweise hat ein Rotor 10a, 10b, 10c sechs bis zehn Pole, die gleichmäßig über dem Umfang verteilt sind. Radial au ßerhalb des Rotors 10a, 10b, 10c ist jeweils ein nicht gezeigter Stator mit der gleichen Polanzahl angeordnet.

Jeder Pol eines Rotors 10a, 10b, 10c weist mehrere Magnetlagen auf, die jeweils aus einer Reihe von Magnetelementen bestehen. Die Ausführungsform gemäß Figur 1 umfasst drei Magnetlagen I, II, III. Die erste Magnetlage I besteht aus drei Magnetelementen 12, die eine herkömmliche Gestaltung aufweisen. Die Magnetelemente 14a und 14b haben die erfindungsgemäße Ausgestaltung. In gleicher Weise haben die Magnetelemente 16a und 16b der dritten Magnetlage III die erfindungsgemäße Ausgestaltung. Es sei in diesem Zusammenhang erwähnt, dass im Rahmen der Erfindung jedoch nicht alle Magnetelemente 14, 16 der beiden Magnetlagen eine derartige Ausgestaltung aufweisen müssen. Insbesondere bei den inneren Magnetelementen 14b, 16b, die eine eher tangentiale Ausrichtung aufweisen, kann eine herkömmliche Gestaltung zur Anwendung gelangen.

Die Magnetelemente 14, 16 sind mittels Spritzgießen oder Gießen und Verfestigen von permanentmagnetischem Material in entsprechend geformten Rotorkavitäten gebildet. Die Magnetelemente 14, 16 weisen jeweils in ihren radial inneren Hälften beidseitig abstehende Vorsprünge 18 auf. Die Vorsprünge 18 liegen bei den radial äußeren Magnetelementen 14a, 16a im radial inneren Teil der Magnetelemente 14a, 16a.

In Figur 1 ist eine weitere Ausführung von Magnetelementen 16b der Lage III dargestellt, die ein Längen/Breitenverhältnis von mehr als 3:1 (ohne Berücksichtigung der durch die Vorsprünge 18 bewirkten Verbreiterungen) aufweisen, wobei in der radial äußeren Hälfte zwei weitere beidseitig abstehende Vorsprünge 19 ausgebildet sind. Dies bewirkt eine weniger belastende Krafteinleitung der Fliehkräfte der Magnetelemente 16b in den Rotor 10a, weil diese auf vier Vorsprünge 18, 19 aufgeteilt wird.

Die Ausführung gemäß Figur 2 umfasst lediglich zwei Magnetlagen I und II, wobei alle Magnetelemente 20 sowohl der äußeren Magnetlage I als auch die Magnetelemente 22a, 22b der inneren Magnetlage II die erfindungsgemäße Ausbildung mit beidseitigen Vorsprüngen 18 aufweisen.

Die Ausführung gemäß Figur 3 umfasst wiederum drei Magnetlagen I, II und III, wobei alle Magnetelemente 20, 22, 24 aller Magnetlagen die erfindungsgemäße Ausbildung mit beidseitigen Vorsprüngen 18 aufweisen. In den Figuren 2 und 3 sind die Magnetelemente 22, 24 der zweiten bzw. dritten Magnetlage II, III geradlinig hintereinander angeordnet. Es ist alternativ im Rahmen der Erfindung selbstverständlich möglich, die Magnetlagen wie in Figur 1 bogenartig auszubilden.

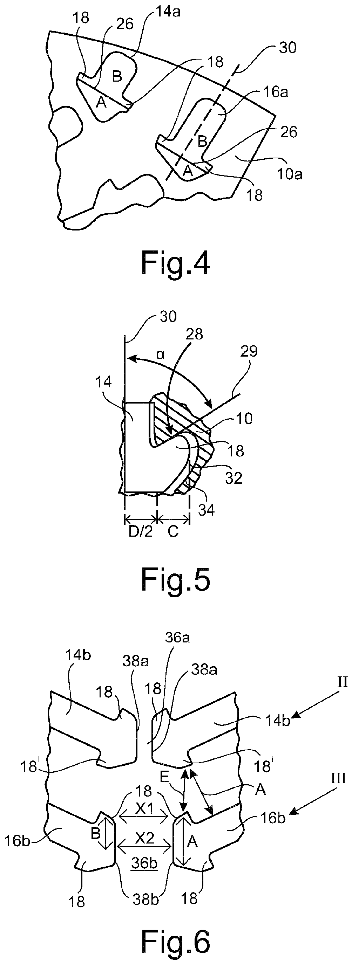

In Figur 4 ist dargestellt, dass die Magnetelemente 14a, 16a die jeweiligen Vorsprünge 18 im Bereich der radial inneren Hälfte aufweisen, also die Flächen A, die hinter der jeweiligen Verbindungslinie 26 der breitesten Erstreckung der Vorsprünge liegen, kleiner sind als die Flächen B vor dieser Verbindungslinie 26. Dadurch erfolgt die Abstützung der Magnetelemente 14a, 16a relativ weit radial innen, was die mechanischen Belastungen im radial äußeren Bereich vermindert.

In Figur 5 ist eine bevorzugte Ausbildung der Erfindung dargestellt, wonach die Vorsprünge 18 der Magnetelemente 14 (16, 20,22, 24) Abstützflächen 28 zur Fliehkraftabstützung am Rotor 10 aufweisen, deren Flächentangenten 29 einen Winkel α zwischen 30° bis 80° zur Erstreckungsrichtung 30 der Magnetelemente aufweisen. Dadurch wird beim Abkühl- und damit einhergehenden Schrumpfungsprozess eine Verschiebung des Magnetelements entgegen der Radialrichtung, also zur Rotormitte bewirkt, was den Spalt zwischen dem Magnetelement und der Kavitätswandung im Bereich des radialen Endes erhöht. Darüber hinaus wird durch die Fliehkräfte eine zentrierende und damit stabilisierende Wirkung auf das Magnetelement erzielt. In Figur 5 ist auch ein stark vergrößert dargestellter Spalt 32 zwischen der Kavitätswandung 34 zu sehen, der durch den Schrumpfungsvorgang des Magnetelements 14 entsteht. Die maximale Erstreckung C jeder der Vorsprünge 18 senkrecht zur Erstreckungsrichtung 30 der Magnetelemente 14 (16, 20,22, 24) beträgt weniger als 50% der Breite D der Magnetelemente 14 an dieser Stelle (in Figur 5 ist D/2 dargestellt).

In Figur 6 ist ein Ausschnitt aus Figur 1 zu sehen, der dort mit VI bezeichnet ist. Dargestellt sind je zwei benachbarte Magnetelemente 14b, 16b, zwischen denen jeweils Brücken 36a, 36b durch Endflächen 38a, 38b der Magnetelemente 14b, 16b definiert sind. Dabei sind gegenüberliegende Endflächen 38a, 38b von benachbarten Magnetelementen 14b, 16b, mindestens in einem Teilbereich von 50% im Wesentlichen eben und näherungsweise parallel zueinander ausgebildet, was dazu führt, dass die Brücken 36a, 36b über mindestens der halben Erstreckung bzw. Länge einen näherungsweise konstanten Querschnitt bzw. eine konstante Breite aufweisen. Mit anderen Worten beträgt über einen Längenabschnitt B, der mindestens die Hälfte der Gesamtlänge A aufweist, das Verhältnis der geringsten Breite X2 zur größten Breite X1 innerhalb der Brücke 36b weniger als 1,2 (X1/X2 < 1,2), also die Breite der Brücke 36b verändert sich in diesem Teilbereich um nicht mehr als 20%. Durch diese Brücken 36a, 36b mit relativ konstanter Breite werden die magnetischen Verluste reduziert.

Die Vorsprünge 18 sind bei diesen Magnetelementen 14b, 16b jeweils am radial inneren Ende dieser Magnetelemente 14b, 16b angeordnet. Dadurch bilden deren jeweilige Rückseiten die radial inneren Endflächen 38a, 38b der jeweiligen Magnetelemente 14b, 16b mit aus und verlängern damit die Brücken 36a, 36b..

Eine bevorzugte Weiterbildung der Erfindung ist in Figur 6 dargestellt. Gegenüberliegende Vorsprünge 18', 18" von benachbarten Magnetelementen 14b, 16b verschiedener Magnetlagen II, III sind dabei derart gegeneinander seitlich versetzt, dass die kürzeste Entfernung E von einem Vorsprung 18' zum nächstliegenden Vorsprung 18" des benachbarten Magnetelements 14b nicht geringer ist als die kürzeste Entfernung A des Vorsprungs 18' zum Seitenrand des benachbarten Magnetelements 16b. Dadurch werden Verengungen zwischen radial benachbarten Magnetelementen 14b, 16b und damit magnetisch gesättigte Zonen vermieden

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa einer weitergehenden Erläuterungen in der Beschreibung, definiert wird.

### Bezugszeichenliste

- 10a,b,c: Rotoren
- 12: Magnetelemente
- 14a,b: Magnetelemente
- 16a,b: Magnetelemente
- 18, 18',18": Vorsprung
- 19: Vorsprung
- 20: Magnetelemente
- 22a,b: Magnetelemente
- 24a,b: Magnetelemente
- 26: Verbindungslinien
- 28: Abstützfläche
- 29: Flächentangente
- 30: Erstreckungsrichtung
- 32: Spalt
- 34: Kavitätswandung
- 36a,b: Brücken
- 38a,b: Endflächen

## Patentansprüche

1. Rotor (10) aus einem magnetischen Material eines Synchron-Antriebsmotors mit mehreren Rotorpolen, die aus mehreren Magnetlagen (I, II, III) aufgebaut sind,
wobei in jeder Magnetlage (I, II, III) eine Reihe von einem oder mehreren Magnetelementen (14, 16, 20, 22, 24) angeordnet ist, die durch Spritzgießen oder Gießen und Verfestigen von permanentmagnetischem Material in Rotorkavitäten eines magnetischen Jochs gebildet sind, wobei mindestens ein Teil der Magnetelemente (14, 16, 20, 22, 24) dessen Längsachsen eher radial ausgerichtet sind, in Bezug auf ihre jeweilige Erstreckung eine radial innere und eine radial äußere Hälfte aufweisen, wobei jeweils in ihren radial inneren Hälften bezüglich ihrer Erstreckung beidseitig der Magnetelemente quer zur Erstreckungsrichtung (30) der Magnetelemente (14, 16, 20, 22, 24) abstehende Vorsprünge (18) zur Abstützung der Fliehkräfte der Magnetelemente am Rotor (10) aufweisen, **dadurch gekennzeichnet, dass**
jeder Rotorpol mindestens zwei radial hinter einander angeordnete Magnetlagen (I, II, III) aufweist, und die Vorsprünge (18, 19) Abstützflächen aufweisen, deren Flächentangenten (29) einen Winkel α von 30° bis 80°zur Erstreckungsrichtung (30) der Magnetelemente aufweisen.

2. Rotor nach Anspruch 1, **dadurch gekennzeichnet, dass** bei Magnetelementen (16b) mit dem Längen/Breitenverhältnis von mehr als 3:1 in der äußeren Hälfte zwei weitere beidseitig abstehende Vorsprünge (19) ausgebildet sind.

3. Rotor nach einem der vorherigen Ansprüche, **dadurch gekennzeichnet, dass** alle Magnetelemente (14, 16, 20, 22, 24) der von radial außen gesehen zweiten und dritten Magnetlage (II, III) derart ausgebildet sind.

4. Rotor nach Anspruch 1 oder 2, **dadurch gekennzeichnet, dass** die jeweils radial außen befindlichen Magnetelemente (14a, 16a, 22a, 24a) einer Magnetlage (I, II, III) derart ausgebildet sind.

5. Rotor nach einem der vorherigen Ansprüche, **dadurch gekennzeichnet, dass** die Vorsprünge (18, 19) Abstützflächen zur Fliehkraftabstützung am Rotor (10) aufweisen, deren Flächentangenten (29) einen Winkel α von 40° bis 60°, zur Erstreckungsrichtung (30) der Magnetelemente aufweisen.

6. Rotor nach einem der vorherigen Ansprüche, **dadurch gekennzeichnet, dass** die maximale Erstreckung (C) jeder der Vorsprünge (18, 19) normal zur Erstreckungsrichtung (30) der Magnetelemente (14, 16, 20, 22, 24) weniger als 50% der Breite (D) der Magnetelemente (14, 16, 20, 22, 24) an dieser Stelle beträgt.

7. Rotor nach einem der vorherigen Ansprüche, **dadurch gekennzeichnet, dass** sich gegenüberliegende Vorsprünge (18', 18") von benachbarten Magnetelementen (14b, 16b) verschiedener Magnetlagen (II, III) derart gegeneinander seitlich versetzt sind, dass die kürzeste Entfernung (E) von einem Vorsprung (18') eines Magnetelements (14b) zum nächstliegenden Vorsprung (18") des benachbarten Magnetelements (16b) nicht geringer ist als die kürzeste Entfernung (A) des Vorsprungs (18') zum Seitenrand des benachbarten Magnetelements (16b).

8. Rotor nach einem der vorherigen Ansprüche, **dadurch gekennzeichnet, dass** Endflächen von Magnetelementen (14b, 16b), die in der gleichen Magnetlage (II, III) benachbarten Magnetelementen (14b, 16b) gegenüber liegen und so Brücken (36a, 36b), zwischen gegenüberliegenden Endflächen (38a, 38b) von benachbarten Magnetelementen (14b, 16b) ausbilden, mindestens in einem Teilbereich von 50% im Wesentlichen eben und parallel zueinander geformt sind, so dass die Brücken (36a, 36b) über mindestens der halben Erstreckung (B) einen konstanten Querschnitt aufweisen.

9. Rotor nach Anspruch 8, **dadurch gekennzeichnet, dass** sich die Breite der Brücke (36) in diesem Teilbereich (B) um nicht mehr als 20% verändert.

10. Rotor nach Anspruch 8 oder 9, **dadurch gekennzeichnet, dass** die Vorsprünge (18) jeweils am radial inneren Ende der Magnetelemente (14b, 16b) angeordnet sind und deren jeweilige Rückseite die radial innere Endfläche (38) des jeweiligen Magnetelements (14b, 16b) mit ausbildet und verbreitert.

11. Synchron-Antriebsmotor mit einem Rotor nach einem der vorhergehenden Ansprüche.

12. Kraftfahrzeug mit einem Synchron-Antriebsmotor nach Anspruch 11.

## Claims

1. Rotor (10) made from a magnetic material for a synchronous drive motor with several rotor poles which are built up from several magnetic layers (I, II, III), wherein a row of one or more magnetic elements (14, 16, 20, 22, 24) is arranged in each magnetic layer (I, II, III), said magnetic elements are formed by injection molding or casting and hardening of permanent magnetic material in rotor cavities of a magnetic yoke, wherein at least some of the magnetic elements (14, 16, 20, 22, 24), whose longitudinal axes are aligned rather more radially, have a radially inner and a radially outer half with respect to their respective extension, wherein said magnetic elements have, in each case in their radially inner halves with respect to their extension, projections (18) on both sides of the magnetic elements protruding transverse to the extension direction (30) of the magnetic elements (14, 16, 20, 22, 24) for supporting the centrifugal forces of the magnetic elements on the rotor (10),
**characterized in that**
each rotor pole has at least two magnetic layers (I, II, III) arranged radially one behind the other, and the projections (18, 19) have support surfaces whose surface tangents (29) have an angle α of 30° to 80° to the extension direction (30) of the magnetic elements.

2. Rotor according to claim 1, **characterized in that**, in the case of magnetic elements (16b) having a length/width ratio of more than 3:1, two further projections (19) protruding on both sides are designed in the outer halves.

3. Rotor according to one of the preceding claims, **characterized in that** all magnetic elements (14, 16, 20, 22, 24) of the second and third magnetic layers (II, III), when viewed from a radially outside perspective, are designed in this way.

4. Rotor according to claim 1 or 2, **characterized in that** the magnetic elements (14a, 16a, 22a, 24a), respectively located radially outwardly in a magnetic layer (I, II, III), are designed in this way.

5. Rotor according to one of the preceding claims, **characterized in that** the projections (18, 19) have support surfaces for centrifugal support on the rotor (10), whose surface tangents (29) have an angle α of 40° to 60° to the extension direction (30) of the magnetic elements.

6. Rotor according to one of the preceding claims, **characterized in that** the maximum extension (C) of each of the projections (18, 19) normal to the extension direction (30) of the magnetic elements (14, 16, 20, 22, 24) is less than 50% of the width (D) of the magnetic elements (14, 16, 20, 22, 24) at this point.

7. Rotor according to one of the preceding claims, **characterized in that** opposite projections (18', 18") of adjacent magnetic elements (14b, 16b) of different magnet layers (II, III) are offset laterally with respect to one another in such a way that the shortest distance (E) from one projection (18') of one magnetic element (14b) to the closest projection (18") of the adjacent magnetic element (16b) is not less than the shortest distance (A) of the projection (18') to the side edge of the adjacent magnetic element (16b).

8. Rotor according to one of the preceding claims, **characterized in that** end surfaces of magnetic elements (14b, 16b), which lie opposite adjacent magnetic elements (14b, 16b) in the same magnetic layer (II, III) and thus form bridges (36a, 36b) between opposite end surfaces (38a, 38b), are formed, at least in a partial area of 50%, substantially flat and parallel to one another such that the bridges (36a, 36b) have a constant cross section across at least half of the extension (B).

9. Rotor according to claim 8, **characterized in that** the width of the bridge (36) changes by not more than 20% in this partial area (B).

10. Rotor according to claim 8 or 9, **characterized in that** the projections (18) are arranged in each case on the radially inner end of the magnetic elements (14b, 16b) and their respective rear side forms and enlarges the radially inner end surface (38) of the respective magnetic element (14b, 16b).

11. Synchronous drive motor having a rotor according to one of the preceding claims.

12. Motor vehicle having a synchronous drive motor according to claim 11.

## Revendications

1. Rotor (10) en une matière magnétique d'un moteur d'entraînement synchrone, pourvu de plusieurs pôles de rotor, qui sont structurés en plusieurs paliers magnétiques (I, II, III), dans chaque palier magnétique (I, II, III) étant placée une rangée d'un ou de plusieurs éléments magnétiques (14, 16, 20, 22, 24) qui sont constitués par moulage par injection ou par moulage et consolidation d'une matière à aimantation permanente dans des cavités de rotor d'une culasse magnétique, au moins une partie des éléments magnétiques (14, 16, 20, 22, 24) dont l'axe longitudinal est orienté plutôt en direction radiale comportant en rapport à leur extension une moitié interne en direction radiale et une moitié externe en direction radiale, et chaque fois dans leur moitié interne en direction radiale en rapport à leur extension, comportant des saillies (18) débordant de part et d'autre des éléments magnétiques, à la transversale de la direction d'extension (30) des éléments magnétiques (14, 16, 20, 22, 24), pour supporter les forces centrifuges des éléments magnétiques sur le rotor (10),
**caractérisé en ce que**
chaque pole de rotor comporte au moins deux paliers magnétiques (I, II, III), placés l'un derrière l'autre en direction radiale et les saillies (18, 19) comportent des surfaces de support, dont les tangentes à la surface (29) présentent un angle α de 30 ° à 80 ° par rapport à la direction d'extension (30) des éléments magnétiques.

2. Rotor selon la revendication 1, **caractérisé en ce que** sur des éléments magnétiques (16b) présentant un rapport longueur / largeur de plus de 3 : 1, deux saillies (19) supplémentaires débordant de part et d'autre sont conçues dans la moitié externe.

3. Rotor selon l'une quelconque des revendications précédentes, **caractérisé en ce que** tous les éléments magnétiques (14, 16, 20, 22, 24) des deuxième et troisième paliers magnétiques (II, III), considérés de l'extérieur en direction radiale sont conçus de la sorte.

4. Rotor selon la revendication 1 ou 2, **caractérisé en ce que** les éléments magnétiques (14a, 16a, 22a, 24a) d'un palier magnétique (I, II, III) qui sont situés respectivement à l'extérieur en direction radiale sont conçus de la sorte.

5. Rotor selon l'une quelconque des revendications précédentes, **caractérisé en ce que** les saillies (18, 19) comportent des surfaces de support pour supporter les forces centrifuges sur le rotor (10), dont les tangentes à la surface (29) présentent un angle α de 40 ° à 60 °, par rapport à la direction d'extension (30) des éléments magnétiques.

6. Rotor selon l'une quelconque des revendications précédentes, **caractérisé en ce que** l'extension (C) maximale de chacune des saillies (18, 19) à la normale de la direction d'extension (30) des éléments magnétiques (14, 16, 20, 22, 24) s'élève à moins de 50 % de la largeur (D) des éléments magnétiques (14, 16, 20, 22, 24) à cet endroit.

7. Rotor selon l'une quelconque des revendications précédentes, **caractérisé en ce que** des saillies (18', 18") mutuellement opposées d'éléments magnétiques (14b, 16b) voisins de différents paliers magnétiques (II, III) sont latéralement décalées l'une par rapport à l'autre, de telle sorte que la distance (E) la plus courte d'une saillie (18') d'un élément magnétique (14b) à la prochaine saillie (18") de l'élément magnétique (16b) voisin ne soit pas inférieure à la distance (A) la plus courte de la saillie (18') au bord latéral de l'élément magnétique (16b) voisin.

8. Rotor selon l'une quelconque des revendications précédentes, **caractérisé en ce qu'**au moins dans une zone partielle de 50 %, des surfaces d'extrémité d'éléments magnétiques (14b, 16b) qui sont opposées dans le même palier magnétique (II, III) d'éléments magnétiques (14b, 16b) voisins et constituent ainsi des ponts (36a, 36b), entre des surfaces d'extrémité (38a, 38b) opposées d'éléments magnétiques (14b, 16b) voisins sont façonnées de manière sensiblement plane et parallèle les unes aux autres, de telle sorte que les ponts (36a, 36b) présentent sur au moins la moitié de l'extension (B) une section transversale constante.

9. Rotor selon la revendication 8, **caractérisé en ce que** dans ladite zone partielle (B), la largeur des ponts (36) ne varie pas de plus de 20 %.

10. Rotor selon la revendication 8 ou 9, **caractérisé en ce que** les saillies (18) sont placées respectivement sur l'extrémité interne en direction radiale des éléments magnétiques (14b, 16b) et **en ce que** leur face arrière respective contribue à constituer et élargit la surface d'extrémité (38) interne en direction radiale de l'élément magnétique (14b, 16b) respectif.

11. Moteur d'entraînement synchrone, pourvu d'un rotor selon l'une quelconque des revendications précédentes.

12. Véhicule automobile, pourvu d'un moteur d'entraînement synchrone selon la revendication 11.
